Europäisches Patentamt

European Patent Office

Office européen des brevets

(19)

(11) Veröffentlichungsnummer : **0 086 733**
**B1**

(12)

# EUROPÄISCHE PATENTSCHRIFT

(45) Veröffentlichungstag der Patentschrift :
11.11.87

(21) Anmeldenummer : 83730005.2

(22) Anmeldetag : 17.01.83

(51) Int. Cl.⁴ : **H 02 B   3/00**

(54) **Verfahren zur Wartung, Montage oder Reparatur einer ein- oder mehrpoligen gekapselten, druckgasisolierten Hochspannungsleitung oder Hochspannungsschaltanlage.**

(30) Priorität : 12.02.82 DE 3205525

(43) Veröffentlichungstag der Anmeldung :
24.08.83 Patentblatt 83/34

(45) Bekanntmachung des Hinweises auf die Patenterteilung : 11.11.87 Patentblatt 87/46

(84) Benannte Vertragsstaaten :
AT CH DE LI

(56) Entgegenhaltungen :
FR-A- 1 371 316
FR-A- 1 578 610
FR-A- 2 385 606
US-A- 3 186 543
PATENT ABSTRACTS OF JAPAN, Band 3, Nr. 78
141(E-121), 5. Juli 1979

(73) Patentinhaber : Siemens Aktiengesellschaft Berlin und München
Wittelsbacherplatz 2
D-8000 München 2 (DE)

(72) Erfinder : Plage, Jürgen, Dipl.-Ing.
Rieppelstrasse 9
D-1000 Berlin 13 (DE)

## Beschreibung

Die Erfindung betrifft ein Verfahren zur Wartung, Montage oder Reparatur einer ein- oder mehrpoligen gekapselten, druckgasisolierten Hochspannungsleitung oder Hochspannungsschaltanlage mit einer metallischen, insbesondere rohrförmigen, geerdeten Kapselung aus elektrisch leitendem Material, die in Längsrichtung gasdichte Schottstellen mit isolierenden Durchführungen für die elektrischen Leiter aufweist, wobei die Leiter und/oder elektrischen Geräte gegenüber der Kapselung und/oder untereinander durch Isolierstoffkörper abgestützt sind, bei dem das Wartungspersonal die Arbeiten innerhalb oder an der Kapselung ohne oder mit Aufrechterhaltung des Betriebsdruckes des Isoliergases durchführt.

Gekapselte druckgasisolierte Hochspannungsschaltanlagen werden im Rahmen der Energieversorgung immer häufiger eingesetzt, wobei sich oft auch das Problem ergibt, ursprünglich kleinere Anlagen zu erweitern, ohne daß dadurch der laufende Betrieb zu lange unterbrochen werden muß (siehe BBC-Mitteilungen 1976, S. 226 bis 231 « Ausbau einer $SF_6$-Schaltanlage für 245 kV bei laufendem Betrieb »). Dabei werden die Montagearbeiten an den Anlageteilen entweder von Bedienungsöffnungen her oder bei geöffneten Stirnseiten der rohrförmigen Kapselung durchgeführt. Dabei ergibt sich die Aufgabe, die bereits in der Kapselung fertig montierten Anlageteile, insbesondere die Isolatoren und Durchführungen, gegen mechanische Beschädigungen, wie sie z. B. durch herabfallende Gegenstände oder beim Transport hervorgerufen werden können, zu schützen.

Zur Lösung dieser Aufgabe dient ein Verfahren der eingangs beschriebenen Art, bei dem gemäß der Erfindung im oder am betroffenen Kapselungsteil zur Abdeckung von Isoliestoffkörpern der Abstützungen bzw. Durchführungen der Schottstellen aufblasbare Schlauchkörper aus elastischem Material in schlaffem Zustand ein- bzw. angebracht werden, die benachbart zu den abzudeckenden Teilen so angeordnet und dann mit einem unter Druck stehenden gasförmigen Stoff aufgeblasen werden, daß sie sich verkeilen.

Das Ein- bzw. Anbringen der Schlauchkörper in schlaffem Zustand bereitet keine Schwierigkeiten, sondern ermöglicht auf einfachster Weise die Abdeckung bzw. Umhüllung der empfindlichen Isolierstoffkörper oder Durchführungen. In aufgeblasenem Zustand bilden die Schlauchkörper ein in seiner Lage fixiertes elastisches Kissen, das unbeabsichtigte äußere Krafteinwirkungen von den empfindlichen Teilen abhält bzw. abdämpft.

Nach Beendigung der Arbeiten wird der Schlauchkörper wieder entfernt, was zweckmäßiger Weise nach Ablassen des Gases in schlaffem Zustand erfolgt. Um die Lage der Schlauchkörper beim Einbringen genauer zu bestimmen, empfiehlt es sich, daß die Schlauchkörper über Befestigungsmittel mit den abzudeckenden Teilen, untereinander oder mit den Kapselungswänden verbunden werden.

Die zur Durchführung des Verfahrens gemäß der Erfindung einzusetzenden Schlauchkörper bestehen mit Vorteil aus einem Hohlkörper aus elastischem Material, der eine in den Hohlraum führende Anschlußleitung aufweist, die ein Absperrorgan enthält. Auf diese Weise kann der Schlauchkörper an eine Zuleitung eines Reservoirs des unter Druck stehenden gasförmigen Stoffes zum Aufblasen angeschlossen werden und nach Erreichen der gewünschten Gestalt wird der in den inneren Hohlraum eingedrungene, unter Druck stehende, gasförmige Stoff durch Betätigung des Absperrorgans am Wiederausströmen gehindert.

Die Länge, Größe und Form des Schlauchkörpers bzw. seines inneres Hohlraums werden jeweils an die Form bzw. Abmessungen der abzudeckenden Teile angepaßt. So empfiehlt sich für eine Verwendung in einer dreipoligen, gekapselten Hochspannungsschaltanlage ein Schlauchkörper, der einem Kissen mit dreieckigem Querschnitt ähnelt.

Im folgenden sei die Erfindung noch anhand der in den Fig. 1 bis 4 der Zeichnung schematisch dargestellten Ausführungsbeispiele näher erläutert.

Es zeigen jeweils :

Fig. 1 eine teilweise geschnittene Kapselung eines senkrecht angeordneten Leistungsschalters,

Fig. 2 einen Schnitt durch einen mit dem Druckbehälter eines mehrpoligen Sammelschienensystems verbundenen Druckbehälter für einen Erdungs- bzw. Trennschalter,

Fig. 3 einen Schnitt durch ein dreipoliges gekapseltes Sammelschienensystem und

Fig. 4 einen Schnitt durch einen Schlauchkörper.

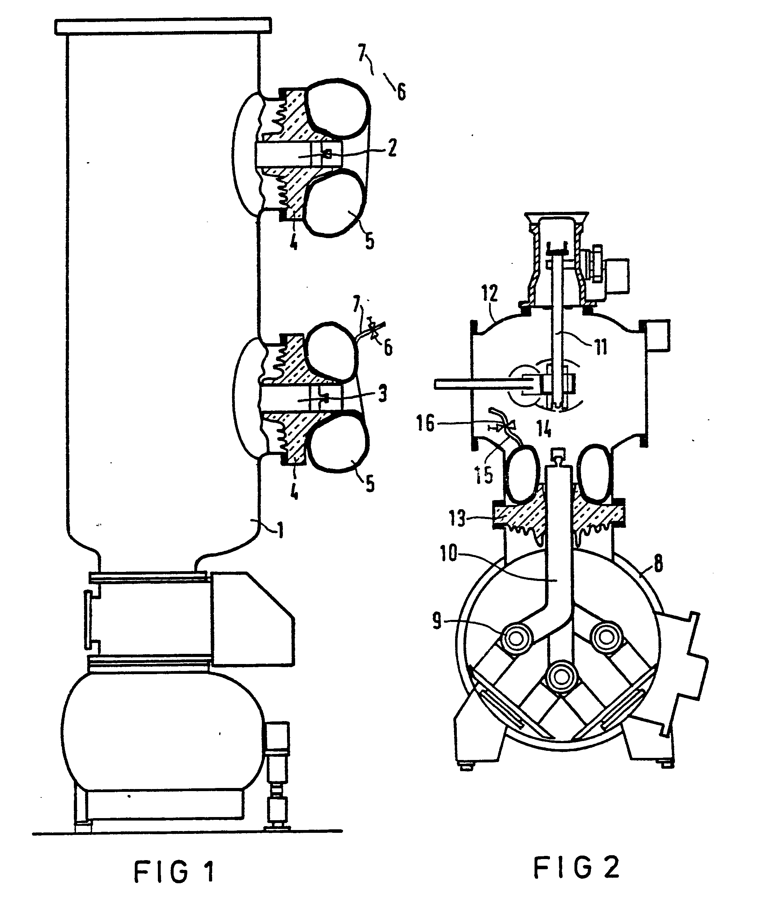

Fig. 1 zeigt den Druckbehälter 1 eines $SF_6$-isolierten Leistungsschalters senkrechter Anordnung nebst Antrieb. Aus diesem Druckbehälter 1 sind seitlich zwei Stromanschlußleiter 2 und 3 herausgeführt, die jeweils von einer gasdichten, scheibenförmigen Durchführung 4 aus Gießharz gegenüber den Wänden des Druckbehälters 1 abgestützt sind. Soll dieser Druckbehälter 1 zur Montage in einem Schaltfeld einer druckgasisolierten gekapselten Hochspannungsschaltanlage transportiert werden, so besteht die Gefahr, daß die seitlich herausragenden Durchführungen 4 während des Transportes unverhofften Schlageinwirkungen ausgesetzt sein können, die sie beschädigen könnten. Aus diesem Grund ist jeweils vor der freiliegenden Außenfläche der Durchführungen 4 ein aufblasbarer Schlauchkörper 5 angeordnet, der in geeigneter, nicht dargestellter Weise in noch schlaffen Zustand an der Durchführung 4 fixiert wird und dann über die ein Absperrorgang 6 aufweisende Anschlußleitung 7 mit einem unter Druck stehendem Gas, z. B. Preßluft, aufgeblasen wird. Dabei legt sich die verhältnismäßig nachgiebige elastische Wand des Schlauchkörpers 5 an die Außenfläche der Durchführung 4 an und deckt diese somit ab. Sollten nun während des Transportes äußere auf die seitlichen Durchführungen 4 gerichtete Kräfte auftreten, so werden diese durch den Schlauchkörper 5 aufgenommen bzw. gedämpft.

In Fig. 2 ist ein unten liegender Druckbehälter 8 mit einem dreipoligen Sammelschienensystem 9 dargestellt. Von diesem führen Stromanschlußleiter 10 zu einem Erdungs- bzw. Trennschalter 11 in einem zweiten Druckbehälter 12, wobei die Stromanschlußleiter 10 eine scheibenförmige Durchführung 13 aus Gießharz durchsetzen, welche eine gasdichte Schottstelle zwischen den Druckbehältern 8 und 12 bildet. Bei einer derartigen Anordnung ist es durchaus möglich, daß in dem oberen Druckbehälter 12 Wartungsarbeiten ausgeführt werden müssen, während der Druck des Isoliergases im Druckbehälter 8 aufrecht gehalten wird. Um zu vermeiden, daß die Durchführung 13, z. B. durch herunterfallende Werkzeuge, beschädigt werden kann, wird vor Durchführung dieser Arbeiten in den Druckbehälter 12 ein aufblasbarer Schlauchkörper 14 in schlaffem Zustand eingebracht, derart, daß er die Durchführung 13 abdeckt. Der Schlauchkörper 14 wird dann über die Anschlußleitung 15 mit einer Preßluftquelle verbunden und aufgeblasen. Er legt sich dabei an die Durchführung 13 und die benachbarten Wände des Druckbehälters 12 an und schützt somit die Durchführung 13. Nach dem Aufblasen des Schlauchkörpers 14 wird das Absperrorgan 16 in der Anschlußleitung 15 geschlossen, so daß der aufgeblasene Schlauchkörper 14 seine schützende Form unverändert während der Dauer der gesamten Arbeiten beibehält. Sind diese Arbeiten abgeschlossen, so wird das Absperrorgan 16 geöffnet, die Preßluft entweicht aus dem Schlauchkörper 14 und dieser kann in einfachster Weise wieder in schlaffem Zustand aus dem Druckbehälter 12 entfernt werden.

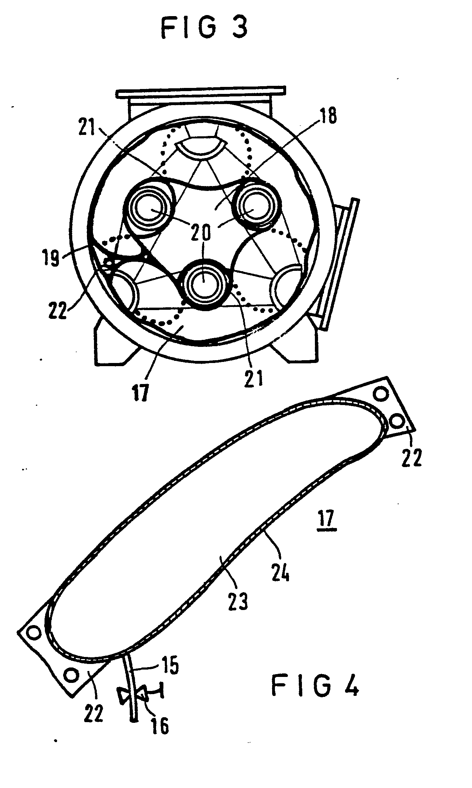

Aus Fig. 3 ist ersichtlich, daß es auch vorteilhaft sein kann, aufblasbare Schlauchkörper 17 und 18 unterschiedlicher Form einzusetzen. So können in einem Druckbehälter 19, in dem ein dreipoliges Sammelschienensystem 20 untergebracht ist, die Isolatoren 21, welche jeweils die Sammelschienen 20 gegenüber der Wand des Druckbehälters 19 abstützen, auf der einen Seite durch einen langgestreckten Schlauchkörper 17 zwischen Sammelschienen 20 und Druckbehälter 19 abgedeckt werden, wobei dieser in schlaffem Zustand so in den Druckbehältern 19 eingelegt wird, daß an seinen Enden angeordnete Befestigungsösen 22 miteinander verbunden werden, so daß der Schlauchkörper 17 einen Ring bildet. Auf der anderen Seite der Isolatoren 21 wird dagegen ein Schlauchkörper 18 angeordnet, der einem Kissen mit dreieckförmiger Form ähnelt und in schlaffem Zustand in die Mitte zwischen den drei Sammelschienen 20 eingeführt wird. Bläst man nun jeweils über die Anschlußleitung 15 den inneren Hohlraum 23, der Schlauchkörper 17 und 18 auf, so verkeilen sich diese zwischen den drei Sammelschienen 20 und dem Druckbehälter 19 und decken die zwischen ihnen liegenden Isolatoren 21 der Abstützung von beiden Seiten her ab. Durch Schließen des Absperrorgans 16 wird der im Hohlraum 23 herrschende Druck und somit die Abdeckung der zu schützenden Teile während der gesamten Dauer der durchzuführenden Arbeiten aufrechterhalten.

Der längliche aufblasbare Schlauchkörper 17 ist in Fig. 4 noch in nicht eingebautem Zusand gezeigt, wobei die Dicke seiner Wand 24 zwecks besserer Anschauung in stark übertriebenem Maße dargestellt ist. Geeignete Materialien für die Schlauchkörper sind elastische, insbesondere isolierende, gasdichte Kunststoffe oder Gummi.

**Patentansprüche**

1. Verfahren zur Wartung, Montage oder Reparatur einer ein- oder mehrpoligen gekapselten, druckgasisolierten Hochspannungsleitung oder Hochspannungsschaltanlage mit einer metallischen, insbesondere rohrförmigen, geerdeten Kapselung (1) aus elektrisch leitendem Material, die in Längsrichtung gasdichte Schottstellen mit isolierenden Durchführungen (4) für die elektrischen Leiter (9, 20) aufweist, wobei die Leiter (9, 20) und/oder elektrischen Geräte gegenüber der Kapselung (1) und/oder untereinander durch Isolierstoffkörper (4, 13, 21) abgestützt sind, bei dem das Wartungspersonal die Arbeiten innerhalb oder an der Kapselung (1) ohne oder mit Aufrechterhaltung des Betriebsdruckes des Isoliergases durchführt, dadurch gekennzeichnet, daß im oder am betroffenen Kapselungsteil (1, 12, 19) zur Abdeckung von Isolierstoffkörpern (4, 13, 21) der Abstützungen bzw. Durchführungen der Schottstellen aufblasbare Schlauchkörper (5, 14, 17, 18) aus elastischem Material in schlaffem Zustand ein- bzw. angebracht werden, die benachbart zu den abzudeckenden Teilen (4, 13, 21) so angeordnet und dann mit einem unter Druck stehenden gasförmigen Stoff aufgeblasen werden, daß sie sich verkeilen.

2. Verfahren nach Anspruch 1, dadurch gekennzeichnet, daß die Schlauchkörper (5, 14, 17, 18) über Befestigungsmittel (22) mit den abzudeckenden Teilen (4, 13, 21), untereinander oder mit den Kapselungswänden verbunden werden.

3. Verfahren nach Anspruch 1 oder 2, dadurch gekennzeichnet, daß die Schlauchkörper (5, 14, 17, 18) nach Beendigung der Arbeiten in schlaffen Zustand entfernt werden.

4. Schlauchkörper zur Durchführung des Verfahrens nach Anspruch 1, dadurch gekennzeichnet, daß der Schlauchkörper (5, 14, 17, 18) aus einem Hohlkörper aus elastischem Material besteht, der eine in den Hohlraum (23) führende Anschlußleitung (7, 15) aufweist, die ein Absperrorgan (6, 16) enthält.

5. Schlauchkörper nach Anspruch 4, dadurch gekennzeichnet, daß der Schlauchkörper (18) einem Kissen mit dreieckigen Querschnitt ähnelt.

6. Schlauchkörper nach Anspruch 4, dadurch gekennzeichnet, daß am Schlauchkörper (17) Befestigungsmittel (22) vorhanden sind.

7. Schlauchkörper nach Anspruch 6, dadurch gekennzeichnet, daß der Schlauchkörper (17) Befestigungsösen (22) aufweist.


## Claims

1. A method for the maintenance, installation, or repair of a mono- or multiphase, encapsulated, pressure-gas-insulated high-voltage line or high-voltage switchgear having a metal, in particular tubular, earthed casing (1) made of an electrically conducting material, which has gas-tight partitions with insulating lead-throughs (4) for electrical conductors (9, 20) in the longitudinal direction, where the conductors (9, 20) and/or electrical devices are supported in relation to the casing (1) and/or to each other by insulating bodies (4, 13, 24), and where the maintenance staff carries out the work inside or on the casing without or with maintenance of the operational pressure, characterised in that in or on the relevant part of the casing (1, 12, 19), in order to cover insulating bodies (4, 13, 21) of the supports or lead-throughs of the partitions, inflatable tubular bodies (5, 14, 17, 18) made of elastic material in a slack condition are inserted in or fitted on to the relevant parts of the casing (1, 12, 19), and positioned adjacent to the parts which are to be covered (4, 13, 21) and are then inflated with a gaseous material under pressure, in such a way that they are wedged in position.

2. A method as claimed in Claim 1, characterised in that the tubular bodies (5, 14, 17, 18) are joined to the parts to be covered (4, 13, 21), to each other, or to the casing walls by fastening means (22).

3. A method as claimed in Claim 1 or 2, characterised in that the tubular bodies (5, 14, 17, 18) are removed in the deflated state after the work is completed.

4. A tubular body for carrying out the method as claimed in Claim 1, characterised in that the tubular body (5, 14, 17, 18) consists of a hollow body of elastic material, having a connection line (7, 15) leading into the interior space (23), and containing a shut-off device (6, 16).

5. A tubular body as claimed in Claim 4, characterised in that the tubular body (18) resembles a cushion with a triangular cross-section.

6. A tubular body as claimed in Claim 4, characterised in that fastening means (22) are provided on the tubular body (17).

7. A tubular body as claimed in Claim 6, characterised in that the tubular body (17) has fastening eyes (22).


## Revendications

1. Procédé pour l'entretien, le montage ou la réparation d'une ligne ou d'une installation de distribution électrique haute tension, mono- ou multipolaire blindée et à isolation par un gaz sous pression, comportant un blindage métallique (1), en particulier de forme tubulaire, mis à la terre, réalisé avec un matériau électriquement conducteur, et pourvu, dans le sens longitudinal des cloisons étanches aux gaz et munies de traversées isolantes (4) pour les conducteurs électriques (9, 20), du type dans lequel les conducteurs (9, 20) et/ou les appareils électriques prennent appui sur le blindage (1) et/ou entre eux par l'intermédiaire d'un corps (4, 13, 21) fait avec une substance isolante, et dans lequel le personnel chargé de l'entretien procède aux travaux à l'intérieur ou sur le blindage (10), alors même que la pression de fonctionnement du gaz isolant est maintenue, caractérisé par le fait qu'à l'intérieur du blindage ou au niveau de la partie concernée (1, 12, 19) du blindage et pour recouvrir les corps (4, 13, 21) en substance isolante des appuis ou des traversées des cloisons, sont introduits ou fixés à l'état flasque des corps de la forme de tuyaux gonflables, et faits avec un matériau élastique, qui sont disposés dans le voisinage des parties (4, 13, 21) à recouvrir et sont ensuite gonflés avec une substance gazeuse sous pression de manière à se coincer.

2. Procédé selon la revendication 1, caractérisé par le fait que les corps de la forme de tuyaux gonflables (5, 14, 17, 18) sont reliés, à l'aide de moyens de fixation (22), aux parties à recouvrir, entre eux ou avec les parois du blindage.

3. Procédé selon la revendication 1 ou 2, caractérisé par le fait que les corps de la forme de tuyaux (5, 14, 17, 18) sont enlevés à l'état flasque, après la fin des travaux.

4. Corps de la forme de tuyaux pour la mise en œuvre du procédé selon la revendication 1, caractérisé par le fait que le corps de la forme d'un tuyau (5, 14, 17, 18) est constitué par un corps creux en un matériau élastique, qui comporte un raccord (7, 15) débouchant dans la cavité dudit corps creux, ainsi qu'un organe de fermeture (6, 16).

5. Corps de la forme de tuyaux selon la revendication 4, caractérisé par le fait que le corps de la forme d'un tuyau (18) ressemble à un coussin de section transversale triangulaire.

6. Corps de la forme de tuyaux selon la revendication 4, caractérisé par le fait que le corps de la forme d'un tuyau est pourvu de moyens de fixation (22).

7. Corps de la forme de tuyaux selon la revendication 6, caractérisé par le fait que le corps de la forme d'un tuyau (17) est pourvu d'œillets de fixation (22).

FIG 1

FIG 2

1

FIG 3

FIG 4